# EUROPÄISCHE PATENTSCHRIFT

(11) **EP 3 847 029 B1**
(45) Veröffentlichungstag und Bekanntmachung des Hinweises auf die Patenterteilung: **10.05.2023**
(21) Anmeldenummer: 19761842.4
(22) Anmeldetag: 29.08.2019
(51) Int. Cl.: B41J 3/407, G06K 15/02

(54) **VERZERRUNGSFREIE BESCHICHTUNG VON FAHRZEUG INTERIEUR-OBERFLÄCHEN**
DISTORTION-FREE COATING OF VEHICLE INTERIOR SURFACES
REVÊTEMENT SANS DÉFORMATION DE SURFACES INTÉRIEURES DE VÉHICULE

(30) Priorität: 04.09.2018 DE 102018121570
(43) Veröffentlichungstag der Anmeldung: 14.07.2021
(73) Patentinhaber: FPT Robotik GmbH & Co. KG, 88279 Amtzell (DE)
(72) Erfinder: KARLSTEDT, Florian, 45359 Essen (DE)
(74) Vertreter: Michalski Hüttermann & Partner Patentanwälte mbB
(86) Internationale Anmeldenummer: PCT/EP2019/073045
(87) Internationale Veröffentlichungsnummer: WO 2020/048854

(56) Entgegenhaltungen:
- EP-A1- 2 327 555
- EP-A1- 3 208 746
- DE-A1-102012 006 371
- US-A- 5 255 352

## Beschreibung

Die Erfindung betrifft ein Verfahren zur verzerrungsfreien Beschichtung 3-dimensionaler Werkstücke mit partiell bi-direktional gekrümmten Oberflächen, wobei das Verfahren die Schritte umfasst: Bereitstellung digitaler 2D-Daten einer Funktionsschicht und digitaler 3D-Oberflächenprofildaten eines zu beschichtenden Werkstücks; Aufteilen der Werkstückoberfläche in Flächen eines Rasters; Aufteilen der Werkstückoberfläche in eine oder mehrere Verfahrbahnen eines Beschichtungskopfes, wobei die Verfahrbahnen oberhalb der Werkstückoberfläche verlaufen und die Schnittlinien benachbarter Verfahrbahnen zumindest aneinanderstoßen; Projektion der die Rasterflächen begrenzenden Linienzüge an eine oder mehrere Verfahrbahnen oberhalb der betreffenden Rasterfläche; Aufteilen der Werkstückoberfläche in zur verzerrungsfreien Beschichtung geeignete Flächenbereiche mit Rasterprojektionsflächen deren Rasterlinien ein bestimmtes Abstandkriterium erfüllen und ungeeignete Bereiche, die dieses Kriterium nicht erfüllen; und Aufbringen einer Funktionsschicht auf mindestens einen Teil des als zur verzerrungsfreien Beschichtung festgelegten geeigneten Oberflächenbereichs des Werkstücks.

Das Aufbringen ästhetischer Dekore oder funktionaler Beschichtungen auf Oberflächen über Druckverfahren gehört seit langem zum Stand der Technik. So können beispielsweise mittels digitaler Beschichtungsverfahren wie dem Laser- oder Inkjet-Verfahren Oberflächen, beispielsweise Papier, mit individuellen Motiven oder weiteren Funktionen und Eigenschaften versehen werden. Das fundamentale Prinzip ist dabei gleich und beinhaltet eine Relativbewegung zwischen einem Druck-/Beschichtungskopf und der zu beschichteten Oberfläche. Letztere kann dann wahlweise direkt (Inkjet) oder indirekt (Laser), d.h. über einen Umweg über eine Trommel, beschichtet werden. Der Beschichtungsvorgang gestaltet sich in den Fällen als einfach, in welchen bedingt durch eine zweidimensionale Oberflächengeometrie des Produktes ein festes Verhältnis zwischen Druckkopf und Oberfläche eingehalten werden kann.

Im Falle komplexerer Oberflächen, beispielsweise 3-dimensionaler Oberflächen mit Sprüngen in der Oberflächenhöhe und/oder partiell in einer oder zwei Richtungen gekrümmter Oberflächen, ist das Bedrucken oder Beschichten deutlich schwieriger, da den veränderlichen Relationen zwischen Oberfläche und Druckkopf Rechnung getragen werden muss. Werden diese Oberflächen mit den üblichen Standardverfahren beschichtet, so ergeben sich als Funktion der Oberflächenabweichungen Verzerrungen des aufgebrachten Dekors oder aber Einbußen in der Funktionalität durch ungleichmäßig beschichtete Bereiche.

Eine mögliche Lösung für Massenprodukte mit "konstanter" aber nicht planarer Oberflächengeometrie, wie beispielsweise einfach gekrümmte Kaffeetassen mit konstantem Radius, besteht darin, dass über die Adaption des Druckkopfes an die spezifische Oberflächengeometrie des Produktes relativ einfach ein gleichmäßiger Beschichtungsprozess gewährleistet werden kann. Handelt es sich aber um Oberflächen mit komplexen und über die gesamte zu beschichtende Oberfläche variierenden Abweichungen in der Höhe und/oder der Krümmung, insbesondere bei partiell doppelt gekrümmten Oberflächenbereichen, so kann für Kleinserien unter vertretbaren technischem Aufwand über die Adaption der Druckkopfgeometrie keine geeignete Anpassung mehr erreicht werden.

Auch in der Patentliteratur finden sich die unterschiedlichsten Ansätze zur Bedruckung oder Beschichtung von gekrümmten Oberflächen.

So offenbart beispielsweise die US 5,831,641 A ein Verfahren und eine Vorrichtung zum Prägen von Bildern hoher Qualität auf nicht-planare Oberflächen, einschließlich der Oberflächen verschiedener Arten von dreidimensionalen Gegenständen, wie Baseballschlägern, die aus einer Anzahl unterschiedlicher Arten von Materialien gebildet sind. In dem Verfahren werden die nicht-planaren Oberflächen der dreidimensionalen Artikel unter Verwendung einer einzigartig modifizierten Tintenstrahl-Bildübertragungstechnik gedruckt. Die Vorrichtung der Erfindung schließt einen modifizierten Tintenstrahldrucker ein, der mit einer neuartigen Artikelpositionierungsvorrichtung verbunden ist, die automatisch die Oberfläche des zu bedruckenden Artikels in einer im Wesentlichen parallelen und leicht von der Stelle, an der die Tintenstrahldüsen angeordnet ist, beabstandeten Ebene des Tintenstrahldruckers hält.

Die DE 1020 1200 6371 A1 beschreibt ein Beschichtungsverfahren. Das Verfahren beinhaltet das Bereitstellen eines Bildes und das Ausführen eines dreidimensionalen (3D) Messprozesses in einem Bereich. Es werden Raumpunkte entsprechend der Region erzeugt. Ein 3D-Netzwerk wird entsprechend der Region erzeugt. 3D Web-Daten werden erzeugt, um einen Roboter, z. B. einen Schwenkarmroboter, für einen Tintenstrahldruckkopf zu bewegen. Rasterdaten, d.h. 3D oder höherdimensionale Raster-Matrix-Daten werden erzeugt, um den Tintenstrahl-Drucckopf zu steuern. Der Roboter wird unter Verwendung der Webdaten bewegt. Das Bild wird mit dem Tintenstrahldruckkopf unter Verwendung der Rasterdaten gedruckt.

In einem weiteren Patentdokument, der EP 2 213 462 A1, wird eine Vorrichtung zum Aufbringen flüssiger Tropfen auf eine Oberfläche offenbart. Die Vorrichtung weist eine Zuführvorrichtung zum Zuführen eines Gegenstands zu einer Auftragsvorrichtung und eine Steuerung zum Steuern der Zuführvorrichtung, einer Bildspeichervorrichtung und der Anwendungsvorrichtung auf. Die Steuerung weist eine Detektoreinrichtung zum Detektieren eines Teils einer dreidimensionalen Struktur des Objekts auf, wobei die Detektoreinrichtung an der Bildspeichereinrichtung und/oder der Applikationseinrichtung angebracht ist. Die Steuerung steuert das Aufbringen von Fluidtropfen auf das einem Druckmotiv entsprechende Objekt in Abhängigkeit von der erfassten dreidimensionalen Struktur.

Weiterhin beschreibt die EP 3 208 746 A1 ein Verfahren zum Tintenstrahl-Bedrucken wenigstens eines gekrümmten Bereichs der Oberfläche eines Objekts mit einem Druckbild, wobei in dem Bereich ein Raster von Tintentropfen aufgebracht wird und dadurch Druckpunkte erzeugt werden und wobei das Raster von einem Rechner berechnet wird und die Tintentropfen von einem Druckkopf mittels Düsen einer Düsenfläche des Druckkopfs erzeugt und im Bereich appliziert werden, mit folgenden, in dem Rechner ausgeführten Schritten a) bis g) und folgendem, vom Druckkopf ausgeführten Schritt h): a) Bereitstellen von Daten, welche das Druckbild darstellen, b) Bereitstellen oder Berechnen von Daten, welche den Bereich darstellen, c) Bereitstellen oder Berechnen von Bahndaten zu Bahnen, auf welchen sich der Druckkopf oder das Objekt bewegt, d) Berechnen der Applikationsorte der Tintentropfen unter Verwendung der Daten aus b) und c), e) Berechnen von Daten, welche auf einer Kachelung des Bereichs basieren, unter Verwendung der Daten aus d), f) Kalibration der Tonwerte unter Verwendung der Daten aus e), g) Rastern des Druckbildes unter Verwendung der Daten aus f), und h) Bedrucken des Bereichs mit dem gerasterten Druckbild.

In der EP 2 327 555 A1 wird ein Verfahren zur adaptiven Anpassung des Volumenstroms der ausgestoßenen Tinte für einem Tintenstrahldrucker offenbart. Das Verfahren umfasst einen Tintendruckkopf mit zumindest einer Druckreihe Tintenausstoßdüsen, wobei von einem Druckdatenaufbereitungsmodul ein zu druckendes Abbild in Ansteuerinformation für die Tintenausstoßdüsen umgewandelt wird, insbesondere in eine Folge von Ansteuerimpulsen, um durch individuelle Ansteuerung der Düsen zur Abgabe eines Tintentropfens in eine Ausstoßrichtung, das Abbild punktweise auf eine Oberfläche des Druckteils zu übertragen, dadurch gekennzeichnet, dass durch Ermittlung einer Bewegungsinformation des sich in einer Bewegungsebene relativ zum Tintendruckkopf bewegenden Druckteils eine Koordinateninformation relativ zum Druckteil ermittelt wird und durch Vergleich der Koordinateninformation mit einem hinterlegten Profilmodell des Druckteils eine Steigung der zu bedruckenden Oberfläche in Bezug zur Ausstoßrichtung der Tinte ermittelt wird, wobei bei Überschreiten eines Schwellwerts der Steigung, der Volumenstrom der ausgestoßenen Tinte proportional zur Steigung erhöht wird.

Trotz der schon bekannten Lösungen zum Beschichten 3-dimensionaler Oberflächen besteht weiterhin Bedarf an technischen Lösungen, welche in der Lage sind dem Kundenwünschen zu entsprechen und auch komplexe Oberflächengeometrien mit Krümmungen in mehr als einer Oberflächenrichtung, zumindest in Teilbereichen, verzerrungsfrei und flexibel zu beschichten. Es ist die Aufgabe der vorliegenden Erfindung ein Verfahren bereitzustellen, welches ermöglicht, komplexe 3-dimensionale Oberflächen zumindest in Teilbereichen mit verzerrungsfreien funktionalen Schichten zu versehen. Es ist weiterhin die Aufgabe der vorliegenden Erfindung ein System für das erfindungsgemäße Verfahren bereitzustellen.

Gelöst wird die Aufgabe für das Verfahren durch die Merkmale des Anspruchs 1 und für das

System durch die Merkmale des Anspruchs 15. Bevorzugte Ausführungsformen des Verfahrens sind in den Unteransprüchen angegeben.

Erfindungsgemäß ist ein Verfahren zur verzerrungsfreien Beschichtung 3-dimensionaler Werkstücke mit partiell bidirektional gekrümmten Oberflächen, wobei das Verfahren mindesten die Schritte umfasst:
a) Bereitstellung digitaler 2D-Daten einer Funktionsschicht und digitaler 3D-Oberflächenprofildaten eines zu beschichtenden Werkstücks;
b) Aufteilen der Werkstückoberfläche in Flächen eines Rasters, wobei die einzelnen Flächen des Rasters aus einem Linienzug äquidistanter Linien mit Abstand X₀ parallel zu einer X- und einem weiteren, dazu orthogonalen Linienzug äquidistanter Linien mit Abstand Y₀ parallel zur einer Y-Richtung ausgebildet werden;
c) Aufteilen der Werkstückoberfläche in eine oder mehrere Verfahrbahnen eines Beschichtungskopfes, wobei die Verfahrbahnen oberhalb der Werkstückoberfläche verlaufen und die Schnittlinien benachbarter Verfahrbahnen zumindest aneinanderstoßen;
d) Projektion der die Rasterflächen begrenzenden Linienzüge an eine oder mehrere Verfahrbahnen oberhalb der betreffenden Rasterfläche, wobei die Projektion entlang des Normalenvektors der jeweiligen Verfahrbahn erfolgt;
   Austauschseite
e) Klassifikation der Werkstückoberfläche in zur unverzerrten Beschichtung geeignete Flächenbereiche aufweisend Rasterflächen, wobei der maximale Abstand der projizierten Rasterlinien (max Xᵢ, max Yᵢ) der Raster innerhalb dieser Bereiche in mindestens einer Richtung eine Abweichung von kleiner oder gleich 5 % im Vergleich zu den Abständen der Rasterlinien auf der Werkstückoberfläche (X₀, Y₀) aufweist; und zur unverzerrten Beschichtung ungeeignete Flächenbereiche deren max Xᵢ und max Yᵢ eine Abweichung von größer als 5 % aufweisen;
f) Aufbringen einer Funktionsschicht auf mindestens einen Teil des in Schritt e) festgelegten geeigneten Oberflächenbereich des Werkstücks.

Überaschenderweise hat sich herausgestellt, dass sich über das erfindungsgemäße Verfahren auch schwierig zu beschichtende, 3-dimensionale Bauteile mit zweifach gekrümmten, verzerrten Oberflächen reproduzierbar und in hoher Qualität individualisieren lassen. Es lassen sich auf die geeigneten Teilbereiche individuelle Dekore und funktionale bzw. leitfähige Schichten aufbringen, wobei durch die Auswahl der Teilbereiche sichergestellt ist, dass durch die dort auftretenden Oberflächenkrümmungen sich keine qualitätsrelevanten Beschichtungsfehler ergeben. Auf diese Art und Weise lässt sich einfach und ohne eine komplexe Aufarbeitung von Daten und spezielle Anpassung der Dekore auf die nun vorliegende Oberfläche eine Individualisierung erreichen, welche nach dem Stand der Technik entweder als zu komplex abgelehnt worden wäre oder aufwendige Rechenoperationen zu Anpassung des Dekors erfordert hätte. Dieses gilt analog für funktionale Flächen wie z.B. leitfähige Strukturen, kapazitive Flächen, lichtemittierende Bereiche (z.B. OLED) oder weitere leitfähige Strukturen bei denen eine gleichmäßige Abstandsbeziehung zwischen den einzelnen Elementen und/oder Volumendichte die Qualität der Funktion beeinflusst. Auch diese müssten anderenfalls aufwendig an die bidirektional gekrümmte (verzerrte) Oberfläche angepasst werden. Das erfindungsgemäße Verfahren ist schnell und kann auch ohne einen zu hohen Aufwand an eine Hardware oder Rechenleistung durchgeführt werden. Ohne durch die Theorie gebunden zu sein ergeben sich insbesondere durch die erfindungsgemäßen Parameter zur Auswahl der geeigneten Oberflächenbereiche sowohl die Auswahl einer maximal geeigneten Fläche als auch die Identifizierung desjenigen Flächenanteils, welcher sich ohne optische Einbußen verzerrungsfrei beschichten lässt.

Somit kann ein maximaler optimal zu beschichtender Bereich ausgewählt und zur Individualisierung freigegeben werden.

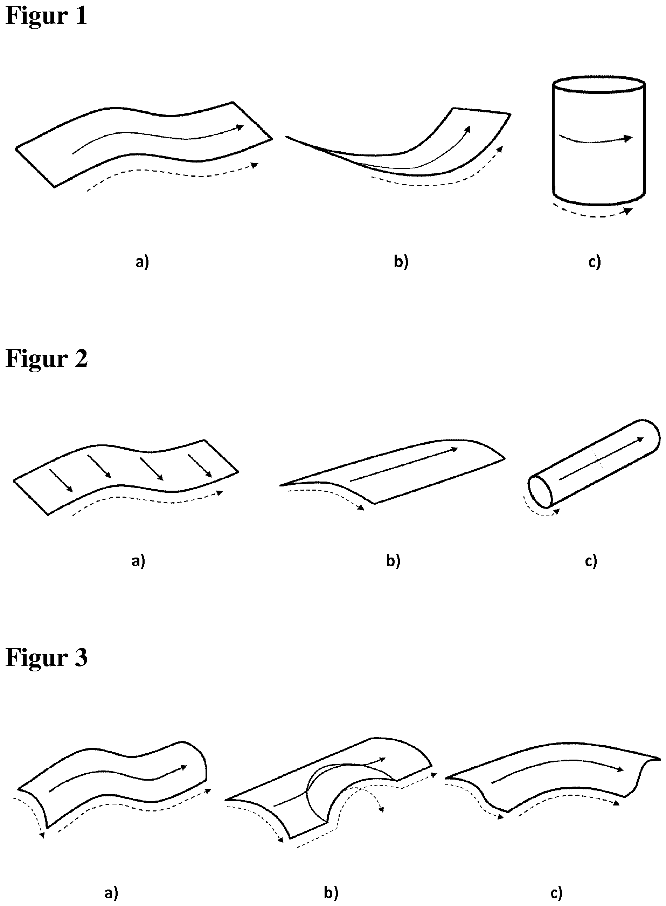

Über das erfindungsgemäße Verfahren wird ein verzerrungsfreies Beschichten ermöglicht. Durch gekrümmte, und insbesondere durch in mehr als eine Richtung gekrümmte, Oberflächen kommt es aufgrund der abweichenden Ausrichtung der jeweiligen Düsen eines Beschichtungskopfes zur darunterliegenden Oberfläche und basierend auf den unterschiedlichen pro Zeiteinheit zurückgelegten Oberflächenabschnitten (siehe Figuren 1-3) zu Fluktuationen in der Beschichtungsdichte. Diese rühren auch daher, dass der Beschichtungskopf sich in aller Regel mit einer konstanten Geschwindigkeit über die Werkstückoberfläche bewegt und eine planare Ausrichtung der Beschichtungsdüsen des Beschichtungskopfes sowie eine 2dimensionale Arbeitsweise aufweist. Als 2-dimensionale Arbeitsweise des Druckkopfes wird dabei verstanden, dass Druckinformationen nur entsprechend der Längen- und Breiteninformationen der Bilddaten und/oder Druckdaten verarbeitet werden. Höhenunterschiede bzw. Streckenunterschiede durch abweichende zurückgelegte Z-Werte werden nicht berücksichtigt. Zudem werden die Bilddaten als 2-dimensionale Datensätze bereitgestellt und müssen auf eine 3-dimensionale Oberfläche aufgebracht werden. Eine Verwendung 3-dimensionaler Bilddaten ist auch bekannt, jedoch aufgrund der 2-dimensionalen Arbeitsweise der Druckeinheiten nicht anwendbar. Beide Effekte führen auf planaren Oberflächen zu einer homogenen und bei 3D-bidirektional gekrümmten Oberflächen zu Verzerrungen in der Beschichtungsdichte.

Mittels des erfindungsgemäßen Verfahrens können 3-dimensionale Werkstücke beschichtet werden. 3D-Werkstücke sind Werkstücke welche, zumindest abschnittweise, eine nicht planare Oberfläche aufweisen. Die Werkstückoberfläche weist also Höhenunterschiede und Unterschiede in der Steigung der Oberfläche auf. Bedingt durch die Höhenunterschiede und aufgrund der Steigung der Oberfläche ist die Oberfläche des Werkstücks gekrümmt.

Die Werkstücke können partiell bidirektional gekrümmte Oberflächen aufweisen. Eine Oberfläche ist im Sinne der Erfindung bidirektional gekrümmt, wenn ein Teil der Oberfläche eine Krümmung im mathematischen Sinn in zumindest zwei unterschiedliche Richtungen aufweist. Beispiele für solche Oberflächengeometrien sind in den Figuren angegeben.

Im Schritt a) werden digitale 2D-Daten einer Funktionsschicht und digitale 3D-Oberflächenprofildaten eines zu beschichtenden Werkstücks bereitgestellt. Im ersten Schritt werden Daten für die vorliegende Beschichtungssituation bereitgestellt. Die Daten können dabei vor Ort erhoben oder beispielsweise durch eine Datenbank bereitgestellt werden. Die Erhebung der Oberflächenprofildaten kann beispielsweise durch einen Scanvorgang, beispielsweise über ein Laserscannen erfolgen. Die Oberflächenprofildaten enthalten dabei mindestens das Oberflächenprofil des Werkstücks, beispielsweise als XYZ-Matrix, mit X, Y, Z Ortskoordinaten sind. Das Dekor kann beispielsweise ein komplexes Bild, eine geometrische Figur, eine gleichmäßige Beschichtung mit konstanter Beschichtungsdichte oder eine oder mehrere Linien darstellen. Die Funktionsschicht wird dabei auf mindestens einen Teil der Oberfläche des Werkstücks aufgebracht. Funktionsschichten im Sinne der Erfindung sind dabei zumindest partiell zusammenhängende Bereiche, welche auf die Werkstückoberfläche aufgebracht oder aufgedruckt werden. Diese zusammenhängenden Bereiche erfüllen dabei weitergehende funktionale Eigenschaften auf der Werkstückoberfläche. Diese funktionalen Eigenschaften können beispielsweise haptischer oder optischer Art sein. Denkbar sind leuchtende Bereiche oder das Aufbringen von Dekoren. Es sind aber auch funktionale Bereiche oder Schichten denkbar, welche festgelegt elektrische Eigenschaften in Form von Schaltern aufweisen. Des Weiteren können funktionale Schichten auch weitere optische Eigenschaften in Form von leuchtenden Bereichen bereitstellen. Zusätzlich können über die funktionalen Bereiche auch weitere haptische Eigenschaften, wie beispielsweise ein tastbares Relief darstellen.

Im Schritt b) wird die Werkstückoberfläche in Flächen eines Rasters aufgeteilt, wobei die einzelnen Flächen des Rasters aus einem Linienzug äquidistanter Linien mit Abstand X₀ parallel zu einer X- und einem weiteren, dazu orthogonalen Linienzug äquidistanter Linien mit Abstand Y₀ parallel zur einer Y-Richtung ausgebildet werden. Die Werkstückoberfläche wird also in quadratische oder rechteckige Raster aufgeteilt, wobei das Rastermaß für beide Richtungen gleich oder unterschiedlich sein kann. Das Rastermaß, also der Abstand zweier benachbarter Linien desselben Zuges, kann dabei beispielsweise 1 mm bis 10 cm betragen. Das Maß kann dabei als Funktion der auftretenden Oberflächengeometrie des Werkstücks und insgesamt als Funktion dessen räumlicher Abmessungen gewählt werden. Werkstücke mit 3D-Oberflächenabweichungen auf kleinen Längenskalen können bevorzugt ein kleines Rastermaß erfordern. Liegen die 3D-Eigenschaften des Werkstücks auf größeren Längenskalen, so kann eine größere Rasterung angebracht sein. Die Festlegung des XY-Koordinatensystems kann als Funktion der Oberflächensymmetrie des Werkstücks gewählt werden. Ein Linienzug besteht dabei aus mindestens zwei parallel verlaufenden Linien.

Im Schritt c) erfolgt das Aufteilen der Werkstückoberfläche in eine oder mehrere Verfahrbahnen eines Beschichtungskopfes, wobei die Verfahrbahnen oberhalb der Werkstückoberfläche verlaufen und die Schnittlinien benachbarter Verfahrbahnen zumindest aneinanderstoßen. Innerhalb dieses Schrittes wird die gesamte Werkstückoberfläche in Verfahrbahnen eines Beschichtungskopfes aufgeteilt, wobei jedes Oberflächenelement, welches beschichtet werden soll, zumindest einmal überfahren wird. Der Abstand der Verfahrbahn zum Werkstück kann, muss aber nicht, konstant gewählt werden. Abstände zwischen Beschichtungskopf und Werkstückoberfläche zwischen 2,5 mm und 5 cm haben sich als geeignet erwiesen. Die Schnittlinie einer Verfahrbahn ist dabei die Randlinie der Verfahrbahn und kennzeichnet die Außenlinie des maximal beschichtbaren Bereichs des Beschichtungskopfes auf dieser Bahn. Diese Schnittlinien stoßen auf unterschiedlichen Verfahrbahnen aneinander, wenn der Abstand der Schnittlinien zweier benachbarter Verfahrbahnen kleiner oder gleich der Beschichtungsauflösung ist. Es ist aber auch möglich, dass die einzelnen Verfahrbahnen so festgelegt werden, dass diese an den Randbereichen, also an den Schnittlinien, überlappen. Mögliche Überlappungsbereiche benachbarter Verfahrbahnen können beispielsweise 5 - 25% der gesamten Beschichtungskopffläche betragen. Bei einer Überlappung der Verfahrbahn können also bestimmte Oberflächenbereiche von mindestens zwei Verfahrbahnen beschichtet werden.

Im Schritt d) erfolgt die Projektion der die Rasterflächen begrenzenden Linienzüge an eine oder mehrere Verfahrbahnen oberhalb der betreffenden Rasterfläche, wobei die Projektion entlang des Normalenvektors der jeweiligen Verfahrbahn erfolgt. Dieses Raster wird entlang der Normalenvektoren der jeweils über dem Oberflächenabschnitt liegenden einen oder mehreren Verfahrbahnen projiziert. An den Schnittlinien und den Übergangsbereichen der Verfahrbahnen bedeutet dies, dass eine Projektion an ggf. zwei betroffene Verfahrbahnen durchgeführt werden kann, wobei sich die Projektionen der Raster in diesem Bereich aufgrund der unterschiedlichen Ausrichtungswinkel der jeweiligen Verfahrbahnen unterscheiden können. Die Vektorebenen der Verfahrbahnen mit den projizierten Rasterlinien und Schnittlinien werden anschließend in eine 2-dimensionale Form transformiert. Die 2-dimensionalen Verfahrbahnen werden entsprechend ihrer Positionen nebeneinander positioniert, so dass jeweils die Schnittlinien der benachbarten Verfahrbahnen nebeneinanderliegen. Lassen sich aufgrund ungünstiger Winkelbereiche in den Außenbereichen der Verfahrbahn bestimmte Werkstückoberflächenbereiche nicht adäquat innerhalb bestimmter Winkelabweichungen zum Beschichtungskopf beschichten, so kann die Verfahrbahn auf eine Druckbahn reduziert werden. Die Druckbahn weist dieselbe Ausrichtung aber einen kleineren Flächenbereich verglichen zur Verfahrbahn auf, wobei die Düsen an den Rändern der Verfahrbahn dann nicht mehr zur Beschichtung genutzt werden. Anschließend werden die Schnittlinien der jeweils benachbarten Druckbahnen dahingehend bewertet, ob diese zu einander komplementär sind, das heißt sich lückenlos ergänzen. Lassen sich die Schnittlinien benachbarten Druckbahnen durchgängig aneinander anfügen, so ist keine Harmonisierung der Bilddaten der Druckbahnen erforderlich. Diese Druckbahnen können direkt nebeneinander ausgerichtet über den 2-dimensionalen Bilddaten positioniert werden.

Im Schritt e) erfolgt eine Klassifikation der Werkstückoberfläche in zur unverzerrten Beschichtung geeignete Flächenbereiche aufweisend Rasterflächen, wobei der maximale Abstand der projizierten Rasterlinien (max Xᵢ, max Yᵢ) der Raster innerhalb dieser Bereiche in mindestens einer Richtung eine Abweichung von kleiner oder gleich 5 % im Vergleich zu den Abständen der Rasterlinien auf der Werkstückoberfläche (X₀, Y₀) aufweist; und zur unverzerrten Beschichtung ungeeignete Flächenbereiche deren max Xᵢ und max Y; eine Abweichung von größer als 5 % aufweisen;. Durch die geometrische Transformation der Rasterlinien an die Verfahrbahn können sich die Abstände der Rasterlinien als Funktion der Verfahrbahn ändern. Je nach Oberflächenprofil und Verfahrbahn ergeben sich geänderte Abstände der Rasterlinien (Xᵢ, Yᵢ), wobei die Unterschiede der Abstände der projizierten Rasterlinien zu den auf der Werkstückoberfläche aufgebrachten (oder aufgedachten) Rasterlinien (X₀, Y₀) ein Maß für die Geeignetheit der Beschichtung und auch ein Maß für die Krümmung der Oberfläche darstellt. Durch die Rasterprojektion an die Verfahrbahn werden dabei sowohl die Verfahrbahn wie auch die Oberfläche als Geeignetheitskriterium einbezogen. Der mittlere Abstand über ein Raster ergibt sich dabei über die mathematische Mittelung der Abstände der Linien in jeweils einmal der X und der Y-Richtung. Dies berücksichtigt auch Änderungen in der Projektion über ein Raster. Weicht der maximale Abstand in einer Richtung weniger als 5% vom der ursprünglichen Abstand auf der Werkstückoberfläche ab, so ist dieses Rasterbereich zur Bedruckung geeignet. Betrachtet wird dabei jeweils ein Raster mit seinen begrenzenden Rasterlinien für sich und Raster die das Geeignetheitskriterium erfüllen, werden zu den geeigneten Oberflächenbereichen zusammengefasst. Ist der maximale Abstand der projizierten Linien auf der Verfahrbahn größer, so ist dieser Teilbereich nicht zur verzerrungsfreien Bedruckung geeignet. Diese Betrachtung wird sowohl für die in X- und Y-Richtung verlaufenden Linien durchgeführt. Geeignete Abweichungen zur Klassifizierung können des Weiteren größer als 4% und bevorzugt größer als 3% betragen.

Im letzten Schritt f) erfolgt das Aufbringen einer Funktionsschicht auf mindestens einen Teil des in Schritt e) festgelegten geeigneten Oberflächenbereich des Werkstücks. Die Beschichtung erfolgt dabei in der Regel durch das Aufbringen von Flüssigkeiten auf die Werkstückoberfläche. Bei den Flüssigkeiten kann es sich beispielsweise um Farben, Tinten, Oberflächenversiegelungssubstanzen oder um andere funktionale Verbindungen handeln (beispielsweise Metalle, anorganische oder organische Verbindungen), welche der Oberfläche ein anderes ästhetisches Erscheinungsbild oder funktionale Eigenschaften verleihen. Die Beschichtung kann beispielsweise mittels eines Inkjet-Verfahrens erfolgen.

In einer bevorzugten Ausgestaltung des Verfahrens kann die in Schritt f) aufgebrachte Funktionsschicht ausgesucht ist aus der Gruppe bestehend aus Dekoren, leitfähigen Strukturen, lichterzeugenden-Strukturen, elektrischen Schaltern, Lichtleitern, Reliefen oder Kombinationen mindestens zweier Elemente dieser Gruppe. Diese Gruppe an Funktionsschichten hat sich im Rahmen des erfindungsgemäßen Verfahrens als besonders geeignet erwiesen. Die zur Herstellung benötigten Verbindungen können besonders stark vom erfindungsgemäßen Verfahren profitieren, sodass besonders gleichmäßige funktionalen Schichten erhalten werden können. Diese Schichten sind langlebiger, da diese eine erhöhte mechanische Stabilität aufweisen und können insbesondere auch optische Strukturen detailgetreuer und ohne Verzerrungen abbilden.

In einer bevorzugten Ausführungsform des Verfahrens können in Schritt e) Oberflächenbereiche zusätzlich als zur verzerrungsfreien Beschichtung ungeeignet klassifiziert werden die Rasterflächen aufweisen, in denen mindestens einer der mittleren Abstände der projizierten Rasterlinien Xᵢ und Yᵢ eine Abweichung von größer oder gleich 5% zu den Abständen X₀ und Y₀ aufweist. Neben der Betrachtung des Maximalabstandes der projizierten Rasterlinien hat sich auch die Betrachtung nur eines mittleren Abstandes eines Rasters als sehr geeignetes Kriterium herausgestellt. Es wird also ein weiteres Kriterium eingeführt, welches zum Ausschluss weiterer Teilbereiche der Oberfläche führen kann. Auf diese Art und Weise können Änderungen der Verfahrbahn oder der Oberfläche auf größeren Dimensionen Rechnung getragen werden, da neben einzelnen Ausreißern auch die Gesamtkrümmung des Bereiches berücksichtigt wird. Zum Ausschluss eines Bereiches reicht insofern die Abweichung in eine Richtung X oder Y. Bevorzugt können auch Raster ausgeschlossen werden, welche eine Abweichung des mittleren Abstandes von größer als 4% und des Weiteren bevorzugt von größer als 3% zeigen. Die mittlere Abweichung ergibt sich dabei als mathematischer Mittelwert der Abstände zweier begrenzender Linien über das betrachtete Rasterelement.

Innerhalb eine bevorzugten Aspektes des Verfahrens kann in einem weiteren Schritt der Normalenvektor für jede Rasterfläche aus Schritt b) und die Winkelabweichungen α(x,y) des Normalenvektors der Rasterfläche in der X- (α(x)) wie auch in der Y-Richtung (α(y)) zum Normalenvektor der Verfahrbahn bestimmt werden. Durch die Rasterlinien wird die Oberfläche in Quadrate oder Rechtecke eingeteilt, wobei ein Oberflächenabschnitt (Raster) durch 4 Rasterlinien begrenzt ist. Bei verzerrten Oberflächenbereichen werden die Quadrate oder Rechtecke aufgrund der Krümmungen in 2 Richtungen selber verzerrt. Bei gleichbleibenden Abständen der Rasterlinien führen unterschiedliche Krümmungen der Teilbereiche zu Krümmungen in den Rasterlinien, woraus die Verzerrung der Flächen resultiert. Für diesen Oberflächenbereich lässt sich ein Normalenvektor festlegen, welcher senkrecht auf der durch die Rasterlinien begrenzten Teiloberfläche steht. Ist innerhalb der Rasterfläche die Oberfläche selbst noch gekrümmt, kann der Normalenvektor beispielsweise für die planare Fläche angegeben werden, welche die gekrümmte Oberfläche im Raster schneidet und oberhalb und unterhalb der Schnittlinie zur gekrümmten Werkstückoberfläche im Raster denselben Rauminhalt aufweist. Die Winkelabweichungen zwischen dem Normalenvektor des Rasters und dem Normalenvektor der Verfahrbahn lässt sich dabei in zwei Richtungskomponenten (x, y) aufgliedern (siehe Figuren), wobei die Winkelabweichungen sehr gut als Maß für die Geeignetheit zur Beschichtung dieses Teilbereiches herangezogen werden können. Dies kann zu einem sicheren Ausschluss ungeeigneter Oberflächenbereiche beitragen.

Im Zuge einer weiteren Ausgestaltung des Verfahrens können im Schritt c) die Verfahrbahnen so gewählt werden, dass sich ein Minimum in der integralen Winkelabweichung Σα(x,y) in X- und Y-Richtung über die Werkstückoberfläche ergibt. Auch die Ausrichtung der Verfahrbahnen kann Einfluss auf die Größe der geeigneten Beschichtungsbereiche der Oberfläche haben. Geeignete Verfahrbahnen können so gewählt werden, dass eine möglichst geringe Winkelabweichung in X und in Y-Richtung der Normalenvektoren der Rasterflächen auf der Oberfläche des Werkstücks und der Verfahrbahn erhalten wird. Dies kann zu einem höheren Anteil an geeigneten Oberflächenbereichen und zu einer größeren Beschichtungsgeschwindigkeit führen.

Innerhalb einer bevorzugten Ausführungsform des Verfahrens können in Schritt e) geeignete Flächenbereiche als Funktion einer maximalen Winkelabweichung Σα(x,y) der Teilfläche festgelegt werden, wobei sämtliche geeigneten Flächenbereiche der Oberfläche in mindestens einer Richtung (X, Y) eine maximale Winkelabweichung Σα(x, y) gleich oder kleiner einem Grenzwert der Winkelabweichung aufweisen. Für spezielle Oberflächengeometrien hat es sich als geeignet herausgestellt, die maximale Abweichung der Normalenvektoren als Geeignetheits-Kriterium zu nutzen. Dies kann zu einer steuerbaren Beschichtungsqualität als Funktion des festgelegten maximalen Wertes führen. Es werden möglichst große geeignete Bereiche erhalten, in denen eine ausreichende Beschichtungsqualität erhalten werden kann. Mögliche maximale Werte für verzerrungsfrei bedruckbare Teilflächen können im Bereich von 5°, bevorzugt 3°, des Weiteren bevorzugt 2,5° in mindestens einer Richtung (x, y) pro Raster des Teilbereiches liegen.

Es hat sich zudem gezeigt, dass analog zur Bewertung der Abstände der Rasterlinien eine zusätzliche Betrachtung der integralen Winkelabweichung Σα(x,y) der Teilfläche sinnvoll sein kann. Hierbei werden sämtliche zur verzerrungsfreien Bedruckung geeigneten Flächenbereiche der Oberfläche in mindestens einer Richtung (X, Y) eine integrale Winkelabweichung Σα(x,y) gleich oder kleiner einem Grenzwert der Winkelabweichung aufweisen. Dieses Kriterium kann als zusätzliches Geeignetheits-Kriterium genutzt werden. Dies kann zu einer steuerbaren Beschichtungsqualität als Funktion der festgelegten maximalen und integralen Werte führen. Es werden möglichst große geeignete Bereiche erhalten, in denen eine ausreichende Beschichtungsqualität erhalten werden kann. Mögliche integrale Werte für verzerrungsfrei bedruckbare Teilflächen können im Bereich von 3° in mindestens einer Richtung (x, y) pro Raster multipliziert mit der Anzahl an Rasterflächen des Teilbereiches liegen.

Innerhalb einer weiteren Ausführungsform des Verfahrens kann der Abstand der äquidistanten Linien der Linienzüge in X- und in Y-Richtung in Schritt b) größer oder gleich 0,1 mm und kleiner oder gleich 5 mm betragen. Die Wahl der Linienabstände in den unterschiedlichen Richtungen kann als prinzipiell als Funktion der Größe und Oberflächenkrümmung der Werkstückoberfläche erfolgen. In den meisten Fällen hat sich aber oben angegebener Bereich für die Abstände der Rasterlinien als besonders geeignet herausgestellt. Mit diesen Abständen können eine Vielzahl unterschiedlicher Oberflächengeometrien mit einer hinreichenden Genauigkeit gerastert werden, sodass qualitativ bessere Beschichtungen erhältlich sind. Kleinere Abstände können nachteilig sein, da der Rechenaufwand überproportional steigt, wohingegen größere Abstände zu nur einer "ungenauen" und nicht adäquaten Abrasterung führen können. Bevorzugt können der Abstand der äquidistanten Linien der Linienzüge in X- (X₀) und in Y-Richtung (Y₀) in Schritt b) größer oder gleich 0,25 mm und kleiner oder gleich 4,5 mm, bevorzugt größer oder gleich 0,3 mm und kleiner oder gleich 4,0 mm betragen.

In einer weiteren Ausführungsform des Verfahrens können in Schritt e) Flächenbereiche ebenfalls als geeignet klassifiziert werden, in denen die Gesamtsumme des Produktes (X₀ - ΔX) * (Y₀ - ΔY) über die einzelnen an die Verfahrbahn projizierten Raster Null ergibt. Eine Möglichkeit zur effizienten Aufteilung der Werkstückoberfläche in zur Beschichtung geeignete Bereiche kann sich dadurch ergeben, dass die Verfahrbahn eine möglichst symmetrische Abweichung sowohl in X- wie auch in Y-Richtung abdeckt. Dazu werden die Differenzen der projizierten Rasterlinienabstände zu den ursprünglichen Rasterabständen betrachtet. Diese Aufteilung kann die Beschichtung eines Oberflächenbereiches mit stark asymmetrischen Oberflächeneigenschaften verhindern und so zur Festlegung besonders geeigneter Beschichtungsbereiche beitragen.

In einer bevorzugten Charakteristik des Verfahrens können in Schritt e) Flächenbereiche ebenfalls als geeignete Flächenbereiche klassifiziert werden, in denen die Gesamtsumme des Produktes tan (α(x)) * tan (α(y)) über die einzelnen Rasterflächen jeweils Null ergibt. Für schwierig zu beschichtende Oberflächen hat sich eine Zusammenstellung anhand des oben angegebenen Kriteriums als sehr verlässlich herausgestellt. Es können auf die Art sicher sehr ungünstige Bereiche ausgeschlossen werden und man erhält ein qualitativ hochwertiges Beschichtungsergebnis in diesen Bereichen.

In einem weiteren Aspekt des Verfahrens kann die Ausrichtung der ersten Verfahrbahn D₀ in Schritt c) so gewählt werden, dass die resultierende Summe der Winkelabweichungen α in dieser Richtung kleiner ist als die Summe der Winkelabweichungen in einer dazu orthogonalen Richtung. Zur Durchführung eines schnellen und möglichst symmetrischen Beschichtungsprozesses in geeigneten Bereichen hat es sich als günstig erwiesen, dass die erste Verfahrbahn so festgelegt wird, dass eine möglichst kleine Winkelabweichung über die zu beschichtende Fläche erhalten wird. Dies kann günstigenfalls dazu führen, dass die sich krümmenden Oberflächen auf der verbleibenden Restoberfläche besonders einfach aufgeteilt werden können. Dies kann die Anzahl der nötigen Verfahrbahnen des Beschichtungskopfes verringern und bei gleichbleibender Qualität zu einer Verringerung der Beschichtungszeit beitragen.

Im Rahmen einer bevorzugten Ausführungsform des Verfahrens kann die Aufteilung der Werkstückoberfläche in mehrere Verfahrbahnen in Schritt c) sequentiell erfolgen, wobei in einem ersten Schritt eine erste Verfahrbahn D₀ und in weiteren Schritten die folgenden Verfahrbahnen jeweils benachbart zur vorhergehenden Verfahrbahn festgelegt werden, wobei die weiteren Verfahrbahnen entweder lückenlos an benachbarte Verfahrbahn anschließen oder überlappend zu diesen festgelegt werden. Die Aufteilung der Werkstückoberfläche in Verfahrbahnen kann günstiger Weise so erfolgen, dass eine erste Verfahrbahn festgelegt und die weiteren Verfahrbahnen zu beiden Seiten der ersten Verfahrbahn lückenlos an diese anschließen. Es ist aber auch möglich, dass die Verfahrbahnen überlappend ausgerichtet sind, so dass ein und derselbe Werkstückoberflächenbereich von beispielsweise zwei unterschiedlichen Verfahrbahnen aus beschichtet werden kann. Die Festlegung, welche der beiden oder ob sogar beide Verfahrbahnen den überlappenden Bereich beschichten, kann beispielsweise als Funktion der vorliegenden Winkelabweichungen getroffen werden. Auf diese Art und Wiese kann eine möglichst große und geeignete Werkstückoberfläche optimal beschichtet werden.

Innerhalb einer weiteren Ausführungsform des Verfahrens kann im Schritt f) mindestens ein Teilbereich der für die verzerrungsfreie Beschichtung als ungeeignet klassifizierten Oberfläche mit einer Funktionsschicht bedruckt werden, welches durch eine Korrektur der Bilddaten an die Verzerrungen der Oberfläche angepasst wurde. Der Vorteil des erfindungsgemäßen Verfahrens kann darin gesehen werden, dass geeignete Teilbereiche einer Oberfläche ohne Rechenaufwand und Dekoränderungen beschichtet werden. Falls eine weitere Beschichtung oder eine vollständige Beschichtung der Werkstückoberfläche gewünscht ist, so kann die ungeeignete Fläche über angepasste Dekordaten bedruckt werden. Die angepassten Bilddaten berücksichtigen dabei die Verzerrungen der Oberfläche durch bidirektionale Krümmungen. Unter Bilddaten werden dabei die Position und die an dieser Position aufzubringende Menge an Substanz verstanden. Es werden demzufolge durch die Bilddaten nicht nur "Bilder", sondern auch die funktionalen Bereiche erhalten. Auf diese Art kann eine einheitliche und optisch abgestimmte Oberflächenbeschichtung erhalten werden.

In einem weiteren Aspekt des Verfahrens kann die angepasste Funktionsschicht auf Oberflächenbereiche aufgebracht werden, die für das verzerrungsfreie Beschichten sowohl geeignet als auch ungeeignet sind. Es hat sich für einige Oberflächengeometrien als günstig herausgestellt, dass angepasste Funktionsschichten auf geeignete und ungeeignete Teilbereiche aufgebracht werden. Dies kann in Teilbereichen zu einer Verringerung der Übergänge zwischen den angepassten und nicht angepassten Funktionsschichtbereichen führen.

In einer bevorzugten Ausführungsform des Verfahrens kann die die gesamte Oberfläche des Werkstücks unter Verwendung eines Gesamtdekors beschichtet werden, wobei das Gesamtdekor sich aus einem angepassten Dekor für die gesamte Oberfläche und zusätzlich aus dem unverzerrten Dekor für geeignete Oberflächenbereiche zusammensetzt. Dieses Verfahren kann zu einer schnellen und qualitativ hochwertigen Beschichtung auch schwierig zu beschichtender Oberflächen beitragen. Unter Gesamtdekor werden dabei sowohl rein optische wie auch funktionale Bereiche auf der Oberfläche des Werkstücks verstanden. Dies bedeutet, dass das Gesamtdekor insgesamt oder in Teilbereichen sowohl optische wie auch andere funktionale Eigenschaften, wie beispielsweise Schalter, Beleuchtungselemente oder Kombinationen dieser Funktionen, bereitstellen kann. Es hat sich für einige Oberflächengeometrien als günstig herausgestellt, dass angepasste Dekore auf geeignete und ungeeignete Teilbereiche aufgebracht werden, wobei danach, über das angepasste Dekor, auf geeigneten Oberflächenbereichen die nicht angepassten Dekore aufgebracht werden. An diesen Stellen ergibt sich dann eine doppelte Beschichtung, welche optische oder funktionale Unterschiede an den Grenzen beider Dekore verringern kann. Auch kann eine derartige teilweise Doppelbeschichtung zu einer erhöhten Funktionalität der gesamten Werkstückoberfläche beitragen.

In einer bevorzugten Ausführungsform des Verfahrens kann die gesamte Oberfläche des Werkstücks unter Verwendung eines Gesamtdekors beschichtet werden, wobei das Gesamtdekor sich aus dem angepassten Dekor in ungeeigneten Oberflächenbereichen und aus dem unverzerrten Dekor in geeigneten Oberflächenbereichen zusammensetzt. Es werden also zwei sich ergänzende Dekore bzw. Schichtbereiche auf die Oberfläche aufgebracht, wobei in ungeeigneten Bereichen ein angepasstes und in geeigneten Bereichen ein unverzerrtes Dekor oder funktionale Bereiche aufgebracht wird. Für die geeigneten Bereiche kann man sich also den hohen Aufwand einer rechnerischen Anpassung des Dekors sparen, da hier das Dekor, wie vorliegend, ohne Qualitätseinbußen aufgebracht werden kann. Dies kann den Rechenaufwand zur Dekoranpassung nur auf die Bereiche beschränken, welche als ungeeignet klassifiziert wurden. Dies kann beispielsweise Systemanforderungen niedrig halten.

Des Weiteren erfindungsgemäß ist die Verwendung des erfindungsgemäßen Verfahrens zur Beschichtung von Automobilteilen. Mittels des erfindungsgemäßen Verfahrens können insbesondere Automobil-Interieur sowie auch -Exterieurteile beschichtet werden. Die Abmessungen der zu beschichteten Teile und die Krümmungen die diese Teile aufweisen haben sich für das Verfahren als besonders geeignet erwiesen. Diese Teile können deutlich schneller und verzerrungsfreier beschichtet werden, welches zu einer deutlich besseren Ästhetik und zu deutlichen Einsparungen an Zeit und Energie beitragen kann. Die erhältlichen funktionalen Bereiche weisen zudem eine ausgezeichnete mechanische Beständigkeit auf, welches auf die gleichmäßige funktionale Beschichtung zurückgeführt.

Weiterhin erfindungsgemäß ist ein System zur Beschichtung 3-dimensionaler bidirektional gekrümmter Oberflächen mindestens aufweisend eine Recheneinheit, einen Aktor, eine Inkjet-Einheit mit mindestens einem Düsenkopf und eine Steuereinheit, wobei das System dazu eingerichtet ist das erfindungsgemäße Verfahren auszuführen. Das System kann dabei eine Recheneinheit aufweisen, welche in der Lage ist die Klassifizierung und die Festlegung der einzelnen Verfahrbahnen in Echtzeit vorzunehmen. Es ist aber auch möglich, bei feststehenden Oberflächengeometrien und feststehenden Dekoren die Berechnung zur Klassifizierung vor dem eigentlichen Beschichtungsvorgang vorzunehmen und den Beschichtungskopf mit den unangepassten und optional weiteren, angepassten Dekordaten zu versorgen. Dies kann eine Recheneinheit mit einer höheren Rechenleistung verlangen. Die Aktorik kann ein oder mehrere kombinierte X,Y- oder X,Y,Z-Arme sein, welche Linear- und/oder Rotationsbewegungen in X,Y,Z ausführen und den Druck-/Düsenkopf und/oder das Werkstück tragen. Der Düsenkopf kann dabei zweckmäßigerweise eine oder mehrere Düsen tragen. Bevorzugt trägt der Drucckopf mehrere in Reihen angeordnete Druckköpfe. Dies kann die Beschichtungsgeschwindigkeit erhöhen. Die Steuereinheit steuert die Relativbewegung zwischen Kopf und Werkstück und kann zudem die Beschichtungseinheit steuern, beispielsweise über eine Impulsregelung einzelner Reihen oder einzelner Düsen. Das System kann ferner dazu eingerichtet sein das Beschichtungsverfahren als Funktion der Bewegung des Beschichtungskopfes singlepass, multipass oder reverse auszugestalten.

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung einzuschränken.

Es zeigen die:
- Fig. 1: in den Ausgestaltungen a), b), c) Beispiele unterschiedlich gekrümmter/verzerrter Oberflächen - parallel zur Verfahrbahn gekrümmte Oberflächen
- Fig. 2: in den Ausgestaltungen a), b), c) Beispiele unterschiedlich gekrümmter/verzerrter Oberflächen - senkrecht zur Verfahrbahn gekrümmte Oberflächen
- Fig. 3: in den Ausgestaltungen a), b), c) Beispiele unterschiedlich gekrümmter/verzerrter Oberflächen - bidirektional gekrümmte - verzerrte - Oberflächen
- Fig. 4: in den Ansichten a) und b), einen beispielhaften Verlauf einer Verfahrbahn über eine komplexe Oberfläche und Verwendung von Rasterlinien;
- Fig. 5: in den Ansichten a) und b), einen beispielhaften Verlauf einer Verfahrbahn über eine komplexe Oberfläche und Verwendung von Rasterlinien;
- Fig. 6: Darstellung der Winkelabweichungen zwischen Normalenvektor der Verfahrbahn und Normalenvektor der Rasterfläche;
- Fig. 7: eine Darstellung des Verfahrbahn und Druckbereiches von Verfahrbahnen inklusive der möglicherweise auftretenden Überlappungsbereiche;
- Fig. 8: in den Ausgestaltungen a) und b), eine Darstellung von Schnittlinien benachbarter Druckbahnen;
- Fig. 9: in den Ausgestaltungen a), b), c), eine Darstellung von Schnittlinien benachbarter Druckbahnen;
- Fig. 10: in den Ausgestaltungen a), b), c), eine Darstellung von Schnittlinien benachbarter Druckbahnen;
- Fig. 11: eine Darstellung bedruckbarer Flächen für ein Armaturenbrett;
- Fig. 12: eine Darstellung bedruckbarer Flächen für ein Armaturenbrett;
- Fig. 13: eine Darstellung bedruckbarer Flächen für ein Armaturenbrett.

Die Figur 1 zeigt schematisch die Möglichkeiten zur unterschiedlichen Beschichtung von Oberflächen. Die Verfahrbahn des Beschichtungskopfes (dargestellt durch den durchgehenden Pfeil (-)) verfährt in diesen Beispielen a) - c) parallel zur Krümmung der Oberfläche des Werkstücks (dargestellt durch den unterbrochenen Pfeil (- - - - )). Als gekrümmte Oberflächen werden allgemein jene Oberflächen verstanden, die abrollbar sind. Diese zeichnen sich dadurch aus, dass konkave und/oder konvexe Krümmungen nur in Längs- oder in Querrichtung zur Verfahrbahn der Druckeinheit liegen und für jeden Punkt der Ebene sich ein Gerade beschreiben lässt die orthogonal zum Krümmungsverlauf verläuft.

Die Figur 2 zeigt schematisch die Möglichkeiten zur unterschiedlichen Beschichtung von Oberflächen. Die Verfahrbahn des Beschichtungskopfes (dargestellt durch den durchgehenden Pfeil (-)) verfährt in diesen Beispielen a) - c) 90° versetzt zur Krümmung der Oberfläche des Werkstücks (dargestellt durch den unterbrochenen Pfeil (- - - -)).

Die Figur 3 zeigt schematisch die Möglichkeiten zur unterschiedlichen Beschichtung von Oberflächen. Die Oberfläche des Werkstücks weist Krümmungen in mehr als einer Richtung auf (dargestellt durch die unterbrochenen Pfeile (- - - -)). Dies bedeutet, dass die Oberfläche verzerrt ist. Die verzerrten Oberflächen unterscheiden sich von den gekrümmten Oberflächen darin, dass diese nicht abwickelbar sind. Bei verzerrten Oberflächen müssten beispielsweise aufzubringende Folien in Teilbereichen gedehnt, gestreckt oder gestaucht werden. Die Verfahrbahn des Beschichtungskopfes (dargestellt durch den durchgehenden Pfeil (-)) kann an dieser Werkstückoberfläche nicht stets symmetrisch zur Krümmung verlaufen und es werden bei konstanter Bewegungsrichtungen des Beschichtungskopfes Werkstückoberflächenbereiche mit deutlich anderer Winkelausrichtung zum Beschichtungskopf hin befahren. Neben den Winkelabweichungen werden bei einer konstanten Bewegungsrichtung des Beschichtungskopfes auch verschiedene Strecken auf der Werkstückoberfläche überstrichen.

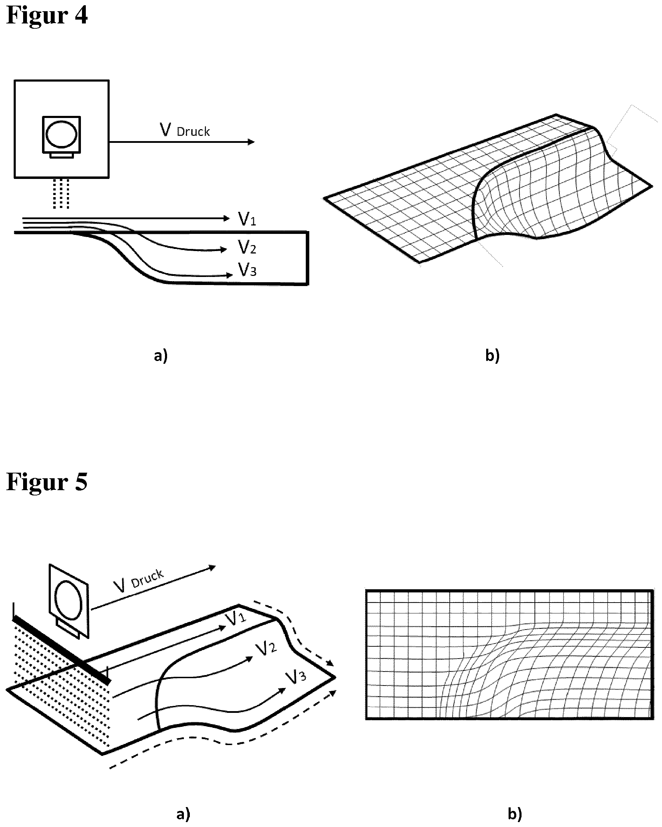

Die Figur 4 und Figur 5 zeigen beispielhaft unterschiedliche Bewegungsbahnen verschiedener Beschichtungsdüsen (V1- V3) eines Inkjet-Kopfes auf einer darunterliegenden konkav und konvex verzerrten Oberfläche a). In den jeweiligen Figuren b) ist die entsprechende Rasterprojektion dargestellt. Insbesondere die abweichende Ausrichtung der jeweiligen Düse zur darunterliegenden Oberfläche hat direkten Einfluss auf die Strecken, die die Düsen auf der darunterliegenden Oberfläche, bei konstanter Bewegung der Druckeinheit, zurücklegen. Diese ergibt sich aus der starren, nicht an die Oberfläche anpassbaren Beschichtungskopfoberfläche. Die Arbeitsweise des Druckkopfes ist als 2-dimensional zu verstehen, unabhängig davon, dass über die Aktorik die Oberfläche und/oder die Beschichtungseinheit eine Relativbewegung mit bis zu 6 Freiheitgraden ausführen kann. Diese Relativbewegung dient dazu, die Druckeinheit möglichst parallel zu jeder Oberflächenposition zuzustellen. Da die Bilddaten nur 2-dimensional abgelegt sind müssen sonstige weitere Daten des Bahnverlaufes wie z.B. Winkelabweichung und Streckenunterschiede bereits in den Bilddaten berücksichtigt werden.

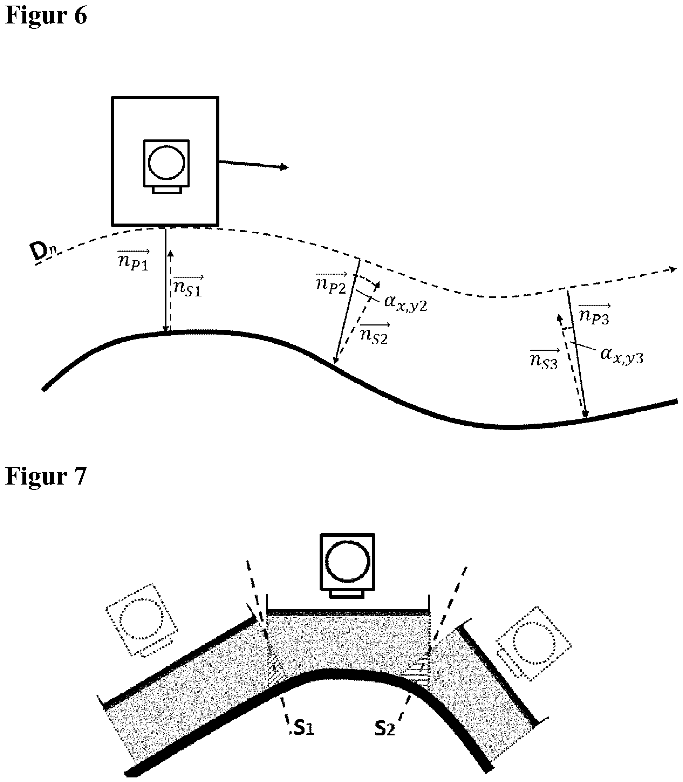

Die Figur 6 zeigt eine beispielhafte Darstellung zum Erhalt der Winkelabweichung zwischen den Normalvektoren der Verfahrbahn (Vektoren mit dem Index P) und dem zugehörigen Normalvektor der Rasterfläche auf der Oberfläche (Vektoren mit dem Index S). Bei kollinearen Normalvektoren ergibt sich keine Winkelabweichung zwischen beiden Normalenvektoren. Für diese Rasterflächen gilt, dass der Normalenvektor der Druckebene ein Vielfaches des Normalenvektors der betreffenden Rasterfläche ist. Die Winkelabweichung beider Normalenvektoren in X- wie auch in Y-Richtung beträgt jeweils null. Ist die Oberfläche gekrümmt, sind die Normalenvektoren nicht mehr kollinear, sondern es ergeben sich je nach Ausrichtung zwischen Werkstückoberfläche und Verfahrbahn Winkelabweichungen jeweils in X- und/oder Y-Richtung (α(x), α(y)).

Die Figur 7 zeigt eine Möglichkeit der Aufteilung bidirektional gekrümmter Oberflächen in Verfahr- und Druckbahnen. Dargestellt ist, dass sich die einzelnen Verfahrbahnen auf der Oberfläche überlappen (S1, S2), d.h. dass einzelne Werkstückoberflächenbereiche prinzipiell über mehrere Verfahrbahnen beschichtet werden können. Als Funktion der Krümmung der Oberfläche kann es zweckmäßig sein, pro Verfahrbahn unterschiedliche Beschichtungsbereiche (Druckbahnen) zu wählen. So ist es möglich, dass der konstant gekrümmt (planare) linke Bereich durch eine Druckbahn beschichtet wird, welche der maximal möglichen Verfahrbahn entspricht (großer Beschichtungsbereich pro Verfahrbahn). Überstreicht die Verfahrbahn allerdings einen Bereich mit starken Krümmungen (mittlerer Kopf), so kann es günstig sein, den Druckbereich unter dieser Verfahrbahn klein zu wählen, um die Winkelabweichungen der Oberfläche pro Verfahrbahn nicht zu groß werden zu lassen. Dies ist im Vergleich zur linken Verfahrbahn durch den kleineren horizontalen Strich angedeutet.

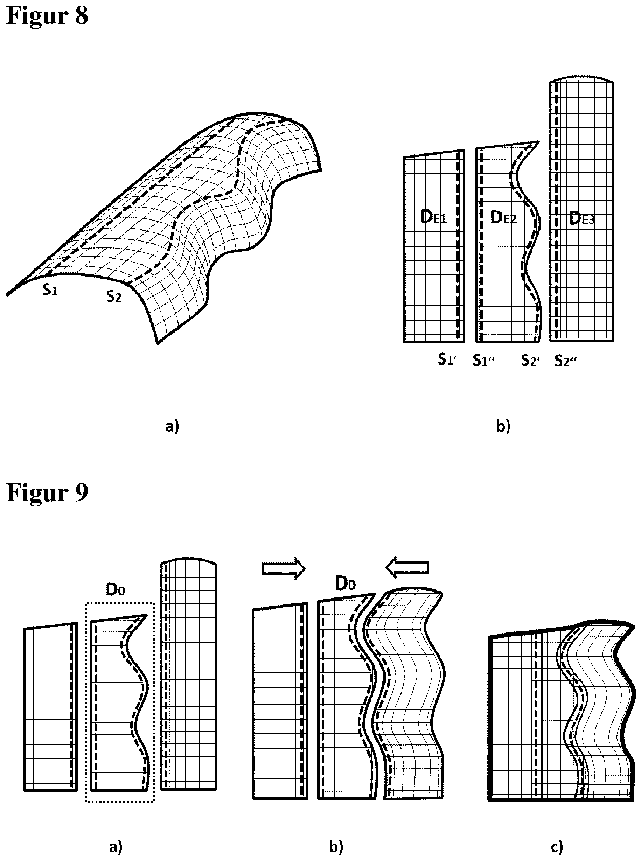

Die Figur 8 zeigt Druckbahnen als Teilbereich von Verfahrbahnen an einer komplexen Werkstückoberfläche. Die Ränder der Druckbahnen an welchen diese aneinanderstoßen werden als Schnittlinien bezeichnet. Je nach gewähltem Verlauf der Verfahr- und Druckbahnen, dem sogenannten Stitching, können die Druckbahnen hart an einander gelegt werden oder sich jeweils auslaufend überlappen. Durch das Stiching ist möglich, die Übergänge zwischen den Druckbahnen über die Drucksystemsteuerung weiter zu kaschieren, dass im späteren Dekoren diese Schnittbereiche nicht zu erkennen sind. Insbesondere bei nicht parallelen Druckbahnen ist zu beachten, dass die Verfahrbahnen abweichende Winkel zur darunterliegenden Fläche des Schnittbereiches aufweisen.

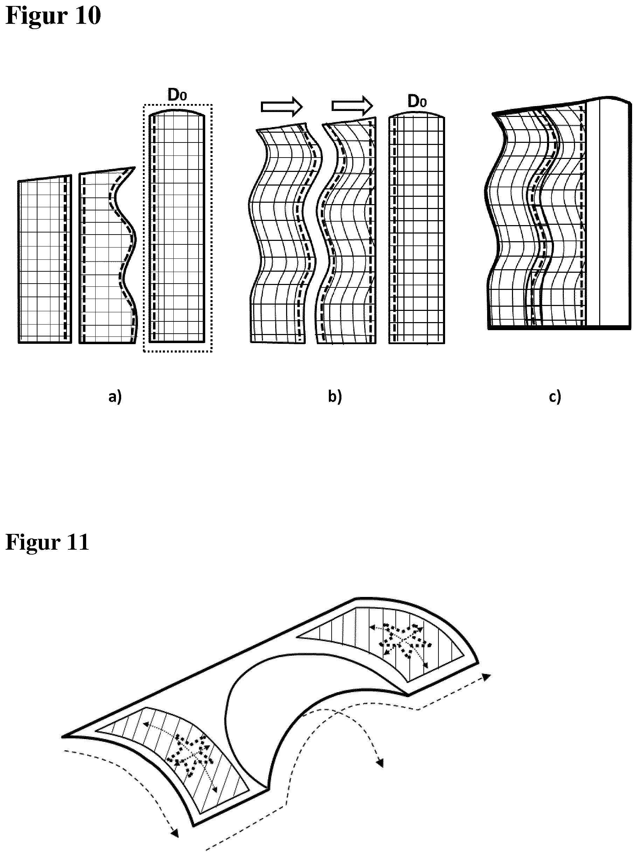

Die Figuren 9 und 10 zeigen komplexe Oberflächen mit den entsprechenden Druckbahnen und Schnittlinien. Auf diesen Oberflächen sind ebenfalls das entsprechende Oberflächenraster und die Schnittlinien angedeutet. Das Dekor der zu bedruckenden Oberfläche setzt sich aus den Segmenten der einzelnen Verfahr- und Druckbahnen zusammen. Damit diese ein homogenes Gesamtbild ergeben, sollten die Bilddaten der einzelnen Druckbahnen so auf einander abgestimmt werden, dass sie ohne sichtbare Sprünge im Dekor aneinandergelegt werden können. Die Bahnen sollten angeglichen werden. Diese Harmonisierung kann unabhängig von der individuellen Oberflächengeometrie unter den jeweiligen Bahnen erfolgen. Sinnvollerweise kann diese abhängig von den Schnittlinien der Druckbahn erfolgen. Dabei kann unter zwei Arten von Schnittlinien unterscheiden werden:
- Benachbarte Druckbahnen mit komplementären Schnittlinien
- Benachbarte Druckbahnen mit nicht komplementären Schnittlinien

Als benachbarte Druckbahnen mit komplementären Schnittlinien werden alle benachbarten Druckbahnen verstanden bei denen die Projektionen der Schnittlinien an die jeweilige Druckbahn komplementär zur Projektion derselben Schnittlinie an die jeweils benachbarte Druckbahn ist. Unter anderem lassen sich parallele Bahnen, also solche welche sich nur hinsichtlich X- und Y-Ausrichtung unterscheiden, sowie Schnittlinien die konstant gerade entlang der X-Achse verlaufen, zu "benachbarten Druckbahnen mit komplementären Schnittlinien" zählen. Es sind aber auch andere Konstellationen denkbar. Bei dieser Art von Druckbahnen können die benachbarten Druckbahnen ohne zusätzliche Bearbeitung der Bilddaten aneinandergelegt werden. Bei benachbarten Druckbahnen mit "nicht komplementären Schnittlinien" lassen sich die Projektionen der Schnittlinie an die beiden Druckbahnen nicht schlüssig aneinanderlegen. Die Ausrichtung des Druckkopfes hat hierbei wesentlichen Einfluss auf die 2-dimensionale Projektion der Schnittlinie, welche den Rahmen für die Bilddaten der jeweiligen Druckbahn definiert. Je nach Ausrichtung kann sich somit die Projektionslänge der Schnittlinie ändern, wodurch eine Anpassung der Bilddaten einer oder beider benachbarter Bahnen erforderlich werden kann, um diese zu harmonisieren.

Die Figur 11 zeigt ein mögliches Ergebnis für die Bewertung 3D-gekrümmter, d.h. verzerrter, Oberflächen. Dargestellt ist, dass sich die beiden äußeren Flächen zur verzerrungsfreien Bedruckung eignen und somit den erfindungsgemäßen Geeignetheitskriterien entsprechen. Diese Flächen können mit beliebigen individuellen Dekoren ohne Qualitätseinbußen gestaltet werden. Der mittlere Bereich hingegen weist eine bidirektional gekrümmte Oberfläche auf (angedeutet durch die Pfeile, welche die Krümmungsradien andeuten). In diesen Bereich ist eine Beschichtung oder Bedruckung nicht verzerrungsfrei möglich. Dieser Bereich wird in die Kategorie der ungeeigneten Bereiche einsortiert.

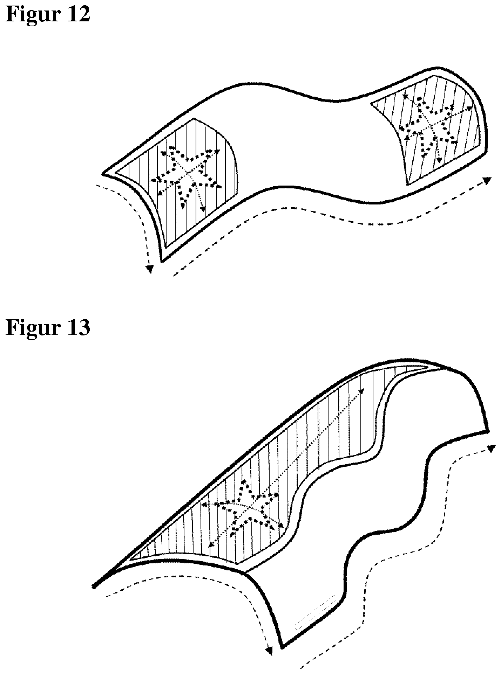

Die Figur 12 zeigt ein mögliches Ergebnis für die Bewertung einer weiteren 3D-gekrümmten, d.h. verzerrten, Oberfläche. Dargestellt ist, dass sich die beiden äußeren Flächen zur verzerrungsfreien Bedruckung eignen und somit den erfindungsgemäßen Geeignetheitskriterien entsprechen. Diese Flächen können mit beliebigen individuellen Dekoren ohne Qualitätseinbußen gestaltet werden. Der mittlere Bereich hingegen weist eine bidirektional gekrümmte Oberfläche auf (angedeutet durch den Pfeil, welcher die Krümmungsradien andeutet). In diesen Bereich ist eine Beschichtung oder Bedruckung nicht verzerrungsfrei möglich. Dieser Bereich wird in die Kategorie der ungeeigneten Bereiche einsortiert.

Die Figur 13 zeigt ein mögliches Ergebnis für die Bewertung einer weiteren, 3D-gekrümmten und verzerrten Oberfläche. Dargestellt ist, dass sich die ein Teilbereich der Längsfläche zur verzerrungsfreien Bedruckung eignet und somit den Geeignetheitskriterien entsprechen. Diese Fläche kann mit beliebigen individuellen Dekoren ohne Qualitätseinbußen gestaltet werden. Dargestellt ist zudem eine Aufteilung in einzelne Verfahrbahnen des Beschichtungskopfes.

## Patentansprüche

1. Verfahren zur verzerrungsfreien Beschichtung 3-dimensionaler Werkstücke mit partiell bidirektional gekrümmten Oberflächen, wobei das Verfahren mindesten die Schritte umfasst:
a) Bereitstellung digitaler 2D-Daten einer Funktionsschicht und digitaler 3D-Oberflächenprofildaten eines zu beschichtenden Werkstücks;
**dadurch gekennzeichnet, dass** das Verfahren die Schritte
b) Aufteilen der Werkstückoberfläche in Flächen eines Rasters, wobei die einzelnen Flächen des Rasters aus einem Linienzug äquidistanter Linien mit Abstand X₀ parallel zu einer X- und einem weiteren, dazu orthogonalen Linienzug äquidistanter Linien mit Abstand Y₀ parallel zur einer Y-Richtung ausgebildet werden;
c) Aufteilen der Werkstückoberfläche in eine oder mehrere Verfahrbahnen eines Beschichtungskopfes, wobei die Verfahrbahnen oberhalb der Werkstückoberfläche verlaufen und die Schnittlinien benachbarter Verfahrbahnen zumindest aneinanderstoßen;
d) Projektion der die Rasterflächen begrenzenden Linienzüge an eine oder mehrere Verfahrbahnen oberhalb der betreffenden Rasterfläche, wobei die Projektion entlang des Normalenvektors der jeweiligen Verfahrbahn erfolgt;
e) Klassifikation der Werkstückoberfläche in zur unverzerrten Beschichtung geeignete Flächenbereiche aufweisend Rasterflächen, wobei der maximale Abstand der projizierten Rasterlinien max. Xᵢ, max. Yᵢ der Raster innerhalb dieser Bereiche in mindestens einer Richtung eine Abweichung von kleiner oder gleich 5 % im Vergleich zu den Abständen der Rasterlinien auf der Werkstückoberfläche X₀, Y₀ aufweist; und zur unverzerrten Beschichtung ungeeignete Flächenbereiche, deren max. Xᵢ und max. Yᵢ eine Abweichung von größer als 5 % aufweisen;
f) Aufbringen einer Funktionsschicht auf mindestens einen Teil des in Schritt e) festgelegten geeigneten Oberflächenbereich des Werkstücks,
aufweist.

2. Verfahren nach Anspruch 1, wobei die in Schritt f) aufgebrachte Funktionsschicht ausgesucht ist aus der Gruppe bestehend aus Dekoren, leitfähigen Strukturen, lichterzeugenden-Strukturen, elektrischen Schaltern, Lichtleitern, Reliefen oder Kombinationen mindestens zweier Elemente dieser Gruppe.

3. Verfahren nach einem der vorhergehenden Ansprüche, wobei in Schritt e) Oberflächenbereiche zusätzlich als zur verzerrungsfreien Beschichtung ungeeignet klassifiziert werden die Rasterflächen aufweisen, in denen mindestens einer der mittleren Abstände der projizierten Rasterlinien Xᵢ und Yᵢ eine Abweichung von größer oder gleich 5% zu den Abständen X₀ und Y₀ aufweisen.

4. Verfahren nach einem der vorhergehenden Ansprüche, wobei in einem weiteren Schritt der Normalenvektor für jede Rasterfläche aus Schritt b) und die Winkelabweichungen α(x,y) des Normalenvektors der Rasterfläche in der X- α(x) wie auch in der Y-Richtung α(y) zum Normalenvektor der Verfahrbahn bestimmt werden.

5. Verfahren nach Anspruch 4, wobei im Schritt c) die Verfahrbahnen so gewählt werden, dass sich ein Minimum in der integralen Winkelabweichung Σα(x,y) in X- und Y-Richtung über die Werkstückoberfläche ergibt.

6. Verfahren nach Anspruch 4 oder 5, wobei in Schritt e) geeignete Flächenbereiche als Funktion einer maximalen Winkelabweichung Σα(x,y) der Teilfläche festgelegt werden, wobei sämtliche geeigneten Flächenbereiche der Oberfläche eine maximale Winkelabweichung Σα(x,y) gleich oder kleiner einem Grenzwert der Winkelabweichung aufweisen.

7. Verfahren nach Anspruch 6, wobei in Schritt e) geeignete Flächenbereiche zusätzlich zur maximalen Winkelabweichung als Funktion einer integralen Winkelabweichung Σα(x,y) der Teilfläche festgelegt werden, wobei sämtliche geeigneten Flächenbereiche der Oberfläche eine integrale Winkelabweichung Σα(x,y) gleich oder kleiner einem Grenzwert der Winkelabweichung aufweisen.

8. Verfahren nach einem der vorhergehenden Ansprüche, wobei in Schritt e) Flächenbereiche ebenfalls als geeignet klassifiziert werden, in denen die Gesamtsumme des Produktes (X₀ - Xi) * (Y₀ - Yᵢ) über die einzelnen an die Verfahrbahn projizierten Raster Null ergibt.

9. Verfahren nach einem der Ansprüche 4 - 7, wobei in Schritt e) Flächenbereiche ebenfalls als geeignete Flächenbereiche klassifiziert werden, in denen die Gesamtsumme des Produktes tan (α(x)) * tan (α(y)) über die einzelnen Rasterflächen jeweils Null ergibt.

10. Verfahren nach einem der Ansprüche 4 - 9, wobei die Ausrichtung der ersten Verfahrbahn D₀ in Schritt c) so gewählt wird, dass die resultierende Summe der Winkelabweichungen α in dieser Richtung kleiner ist als die Summe der Winkelabweichungen in einer dazu orthogonalen Richtung.

11. Verfahren nach einem der vorhergehenden Ansprüche, wobei im Schritt f) mindestens ein Teilbereich der für die verzerrungsfreie Beschichtung als ungeeignet klassifizierten Oberfläche mit einer Funktionsschicht bedruckt wird, welche durch eine Korrektur der Bilddaten an die Verzerrungen der Oberfläche angepasst wurde.

12. Verfahren nach Anspruch 11, wobei die angepasste Funktionsschicht auf Oberflächenbereiche aufgebracht wird die für das verzerrungsfreie Beschichten sowohl geeignet als auch ungeeignet sind.

13. Verfahren nach Anspruch 11 oder 12, wobei die gesamte Oberfläche des Werkstücks unter Verwendung eines Gesamtdekors beschichtet wird, wobei das Gesamtdekor sich aus dem angepassten Dekor in ungeeigneten Oberflächenbereichen und aus dem unverzerrten Dekor in geeigneten Oberflächenbereichen zusammensetzt.

14. Verwendung eines Verfahrens nach einem der vorhergehenden Ansprüche zur Beschichtung von Automobilteilen.

15. System zur Beschichtung 3-dimensionaler bidirektional gekrümmter Oberflächen mindestens aufweisend eine Recheneinheit, einen Aktor, eine Inkjet-Einheit mit mindestens einem Düsenkopf und eine Steuereinheit
**dadurch gekennzeichnet, dass**
das System dazu eingerichtet ist, dass Verfahren nach einem der Ansprüche 1 - 13 auszuführen.

## Claims

1. Method for distortion-free coating of 3-dimensional workpieces with partially bidirectionally curved surfaces, the method comprising at least the steps:
a) Provision of digital 2D data of a functional layer and digital 3D surface profile data of a workpiece to be coated;
**characterized in that** the method comprises the steps of
b) Dividing the workpiece surface into raster areas, the individual raster areas being formed from a line train of equidistant lines at a distance X₀ parallel to an X direction and a further line train, orthogonal thereto, of equidistant lines at a distance Y₀ parallel to a Y direction;
c) Dividing the workpiece surface into one or more trajectories of a coating head, the trajectories running above the workpiece surface and the intersection lines of adjacent trajectories at least abutting one another;
d) projection of the line trains bounding the raster areas onto one or more trajectories above the relevant raster area, the projection being made along the normal vector of the respective trajectory;
e) classifying the workpiece surface into areas suitable for undistorted coating comprising raster areas, wherein the maximum spacing of the projected raster lines max. Xᵢ, max. Yᵢ of the rasters within these areas in at least one direction has a deviation of less than or equal to 5% compared to the distances of the raster lines on the workpiece surface X₀, Y₀; and surface areas unsuitable for undistorted coating whose max. Xᵢ and max. Yᵢ have a deviation of greater than 5%;
f) applying a functional layer to at least part of the suitable surface area of the workpiece defined in step e).

2. The method according to claim 1, wherein the functional layer applied in step f) is selected from the group consisting of decorations, conductive structures, light-generating structures, electrical switches, light guides, reliefs or combinations of at least two elements of this group.

3. The method according to any one of the preceding claims, wherein in step e) surface areas are additionally classified as unsuitable for distortion-free coating which have raster areas in which at least one of the mean distances of the projected raster lines Xᵢ and Yᵢ have a deviation of greater than or equal to 5% from the distances X₀ and Y₀.

4. The method according to one of the preceding claims, wherein in a further step the normal vector for each raster area from step b) and the angular deviations α(x,y) of the normal vector of the raster surface in the X- α(x) as well as in the Y-direction α(y) to the normal vector of the trajectory are determined.

5. The method according to claim 4, wherein in step c) the trajectories are selected such that a minimum in the integral angular deviation Σα(x,y) in X- and Y-direction over the workpiece surface results.

6. The method of claim 4 or 5, wherein in step e) suitable surface areas are determined as a function of a maximum angular deviation Σα(x,y) of the partial surface, wherein all suitable surface areas of the surface have a maximum angular deviation Σα(x,y) equal to or smaller than a limit value of the angular deviation.

7. The method according to claim 6, wherein in step e) suitable surface areas are determined in addition to the maximum angular deviation as a function of an integral angular deviation Σα(x,y) of the partial surface, wherein all suitable surface areas of the surface have an integral angular deviation Σα(x,y) equal to or smaller than a limit value of the angular deviation.

8. The method according to any one of the preceding claims, wherein in step e) area regions are also classified as suitable in which the total sum of the product (X₀ - Xᵢ) ^{∗} (Y₀ - Yᵢ) over the individual raster projected onto the trajectory is zero.

9. The method according to any one of claims 4 - 7, wherein in step e) area regions are also classified as suitable area regions in which the total sum of the product tan (α(x)) * tan (α(y)) over the individual raster areas is zero in each case.

10. The method according to any one of claims 4 - 9, wherein the orientation of the first traverse path D₀ in step c) is selected such that the resulting sum of the angular deviations α in this direction is smaller than the sum of the angular deviations in a direction orthogonal thereto.

11. The method according to any one of the preceding claims, wherein in step f) at least a partial area of the surface classified as unsuitable for the distortion-free coating is printed with a functional layer which has been adapted to the distortions of the surface by a correction of the image data.

12. The method of claim 11, wherein the adapted functional layer is applied to surface areas that are both suitable and unsuitable for distortion-free coating.

13. The method of claim 11 or 12, wherein the entire surface of the workpiece is coated using an overall decor, the overall decor being composed of the matched decor in unsuitable surface areas and the undistorted decor in suitable surface areas.

14. Use of a process according to any one of the preceding claims for coating automotive parts.

15. System for coating 3-dimensional bidirectionally curved surfaces, at least comprising a computing unit, an actuator, an inkjet unit with at least one nozzle head, and a control unit, **characterized in that** the system is set up to carry out the method according to any one of claims 1-13.

## Revendications

1. Procédé de revêtement sans déformation de pièces ouvrées tridimensionnelles pourvues de surfaces partiellement bidirectionnelles courbes, le procédé comprenant au moins les étapes :
a) de mise au point de données 2D numériques d'une couche de fonction et de données de profils de surfaces 3D numériques d'une pièce ouvrée à recouvrir ;
**caractérisé en ce que** le procédé présente les étapes
b) de division de la surface de l'outil ouvré en surfaces d'un quadrillage, où les surfaces individuelles du quadrillage sont formées à partir d'un tracé de ligne de lignes équidistantes d'un intervalle X₀ parallèles à une direction X et d'un autre tracé de ligne orthogonal par rapport à celui-ci de lignes équidistantes d'un intervalle Y₀ parallèles à une direction Y ;
c) de division de la surface de l'outil ouvré en une ou plusieurs bandes de balayage d'une tête de revêtement, où les bandes de balayage s'étendent au-dessus de la surface de la pièce ouvrée et les lignes de croisement de bandes de balayage voisines sont au moins jointives les autres aux autres ;
d) de projection des tracés de lignes délimitant les surfaces de quadrillage au niveau d'une ou de plusieurs bandes de balayage au-dessus de la surface de quadrillage en question, où la projection a lieu le long du vecteur normal de la bande de balayage respective ;
e) de classification de la surface de la pièce ouvrée en zones de surface appropriées pour le revêtement sans déformation présentant des surfaces de quadrillage, où l'intervalle maximal des lignes de quadrillage projetées max.Xᵢ, max.Yᵢ des quadrillages à l'intérieur de ces zones dans au moins une direction présente une déviation inférieure ou égale à 5 % comparativement aux intervalles des lignes de quadrillage sur la surface de la pièce ouvrée, X₀, Y₀ ; et pour le revêtement sans déformation de zones de surface non appropriées dont le max.Xᵢ et max.Yᵢ présentent une déviation supérieure à 5 % ;
f) d'application d'une couche de fonction sur au moins une partie de la zone de surface de la pièce ouvrée déterminée comme appropriée dans l'étape e).

2. Procédé selon la revendication 1, dans lequel la couche de fonction appliquée dans l'étape f) est sélectionnée dans le groupe constitué de décors, de structures conductrices, de structures générant de la lumière, d'interrupteurs de lumière, de conducteurs de lumière, de reliefs ou de combinaisons d'au moins deux éléments de ce groupe.

3. Procédé selon l'une des revendications précédentes, dans lequel, dans l'étape e), en supplément, des zones de surface qui présentent des surfaces de quadrillage sont classées inappropriées pour le revêtement sans déformation, dans lesquelles au moins un des intervalles moyens des lignes de quadrillage projetées Xᵢ et Yᵢ présente une déviation supérieure ou égale à 5 % par rapport aux intervalles X₀ et Y₀.

4. Procédé selon l'une des revendications précédentes, dans lequel, dans une nouvelle étape, le vecteur normal pour chaque surface de quadrillage est déterminé à partir de l'étape b) et les déviations angulaires (α(x,y)) du vecteur normal de la surface de quadrillage dans la direction X - α(x), comme également dans la direction Y - α(y), sont déterminées en plus du vecteur normal de la bande de balayage.

5. Procédé selon la revendication 4, dans lequel les bandes de balayages sont choisies dans l'étape c) de telle manière qu'il se produise un minimum dans la déviation angulaire intégrale Σα(x,y) dans la direction X et la direction Y sur la surface de la pièce ouvrée.

6. Procédé selon la revendication 4 ou la revendication 5, dans lequel, des zones de surface appropriées dans l'étape e) sont déterminées comme étant fonction d'une déviation angulaire maximale Σα(x, y) de la surface partielle, où les zones de surfaces appropriées totales de la surface présentent une déviation angulaire maximale Σα(x,y) égale ou inférieure à une valeur limite de la déviation angulaire.

7. Procédé selon la revendication 6, dans lequel dans l'étape e), des zones de surface appropriées sont déterminées en plus pour la déviation angulaire maximale en tant que fonction d'une déviation angulaire intégrale Σα(x,y) de la surface partielle, où les zones de surfaces appropriées totales de la surface présentent une déviation angulaire intégrale Σα(x,y) égale ou inférieure à une valeur limite de la déviation angulaire.

8. Procédé selon l'une des revendications précédentes, dans lequel, dans l'étape e), des zones de surfaces sont également classées comme appropriées, dans lesquelles la somme totale du produit (X₀ - Xᵢ) ^{∗} (Y₀ - Yᵢ) sur les quadrillages individuels projetés sur la bande de balayage est égale à zéro.

9. Procédé selon l'une des revendications 4 à 7, dans lequel, dans l'étape e), des zones de surfaces sont également classées comme appropriées dans lesquelles la somme totale du produit tan(α(x)) ^{∗} tan(α(x,y)) sur les quadrillages individuels est respectivement égale à zéro.

10. Procédé selon l'une des revendications 4 à 9, dans lequel l'orientation de la première bande de balayage D₀ dans l'étape c) est choisie de telle manière que la somme résultant des déviations angulaires α dans cette direction est inférieure à la somme des déviations angulaires dans une direction qui lui est orthogonale.

11. Procédé selon l'une des revendications précédentes, dans lequel, dans l'étape f), au moins une zone partielle de la surface classée comme étant inappropriée pour le revêtement sans déformation est imprimée avec une couche de fonction, laquelle a été adaptée par une correction des données d'image aux déformations de la surface.

12. Procédé selon la revendication 11, dans lequel la couche de fonction adaptée est appliquée sur des zones de surface qui sont à la fois appropriées et inappropriées pour le revêtement sans déformation.

13. Procédé selon la revendication 11 ou la revendication 12, dans lequel la surface totale de la pièce ouvrée est revêtue moyennant l'emploi d'un décor total, où le décor total est assemblé à partir du décor adapté dans des zones de surfaces inappropriées et à partir du décor non déformé dans des zones de surface appropriées.

14. Utilisation d'un procédé selon l'une des revendications précédentes pour le revêtement de pièces d'automobiles.

15. Système de revêtement de surfaces tridimensionnelles courbes bidirectionnelles présentant au moins une unité de calcul, un actionneur, une unité de jet d'encre avec au moins une tête de pulvérisation et une unité de commande,
**caractérisé en ce que**
le système est conçu pour exécuter le procédé selon l'une des revendications 1 à 13.
